# EUROPEAN PATENT APPLICATION

(11) **EP 0 711 076 A2**
(43) Date of publication of application: **08.05.1996**
(21) Application number: 95307546.2
(22) Date of filing: 24.10.1995
(51) Int. Cl.: H04N 7/173

(54) **Interactive television system**

(30) Priority: 03.11.1994 US 19940333908
(71) Applicant: AT&T Corp., New York, NY 10013-2412 (US)
(72) Inventor: Cannon, Thomas C., Albuquerque, New Mexico 87111 (US)
(74) Representative: Johnston, Kenneth Graham, et al

(57) **Abstract**

An interactive communication system is disclosed which is configured to encourage the viewing of commercial advertisements during television broadcasts. The system includes at least one video display unit adapted to receive and display a video transmission which includes a commercial advertisement. A device is provided for transmitting an interactive message to the video display unit during the commercial advertisement in order to evoke a response from a viewer, and a device is provided for enabling a viewer to respond to the interactive message.

## Description

### BACKGROUND OF THE INVENTION

### Field of the Invention

The subject invention relates to interactive communication systems, and more particularly, to an interactive television system configured to encourage viewing of commercial advertisements.

### Description of Related Art

Computer based interactive information systems are known and have been disclosed, for example, in U. S. Patent No. 5,093,718. This system carries various informative listings and advertisements for goods and services to subscribers in a digitized video format over a computer network. User interaction with the system can be facilitated through a remote control device or a keyboard.

Interactive television systems which enable two-way communication are also known. For example, U.S. Patent No. Re. 34,340 describes a system which provides interactive television programming to a plurality of users connected to a closed circuit television system on conventional television receivers via an interface and selection device connected to the television. Another interactive television system is described in U.S. Patent No. 4,573,072 which provides commercial messages tailored to particular viewers based upon a profile of responses to selected interactive messages. However, while the commercial is presented, no incentive or encouragement is provided to maintain the viewer's attention. Thus the commercial message can be avoided by the viewer.

It would be beneficial to provide a television system configured to encourage the viewing of commercial advertisements by transmitting interactive messages to viewers.

### SUMMARY OF THE INVENTION

An interactive television system is provided for encouraging the viewing of commercial advertisements during television broadcasts. More particularly, the system is configured to facilitate viewer interaction with a commercial advertisement by providing an interactive message to which the viewer can respond. The system includes at least one video display unit adapted to receive and display a video transmission including a commercial advertisement. Means are provided for transmit-ting an interactive message to the video display unit during the commercial advertisement in order to evoke a response from a viewer, and means are provided for enabling a viewer to respond to the interactive message.

In a preferred embodiment of the subject invention, a system control device is provided for facilitating communication between the video display unit and the message transmitting means, and an interface device is provided for facilitating communication between the response enabling means and the video display unit. Preferably, the response enabling means includes a data entry device configured to communicate with the system control device. The data entry device can be a hand-held remote control unit or a standardized alpha-numeric keyboard.

In a preferred embodiment of the subject invention, the data entry device includes means for transmitting an identification code to the system control device. The identification code can correspond to a particular viewer utilizing the data entry device, or to a particular location of a viewer.

The interactive television system of the subject invention can be adapted to transmit a variety of interactive messages to viewers including, for example, contest inquires, educational quizzes, and offerings of goods or services for sale. As an incentive, rewards can be provided to viewers based upon correct answers to particular inquiries. In doing so, viewer avoidance of the commercial advertisement will be discouraged.

These and other features of the subject invention will become more readily apparent from the following detailed description of the invention taken in conjunction with the drawings.

### BRIEF DESCRIPTION OF THE DRAWINGS

So that one skilled in the art to which the subject invention appertains will better understand how to practice the invention, preferred embodiments of the interactive communication system will be described herein-below with reference to the drawings wherein:
Fig. 1 is a schematic representation of an interactive communication system configured in accordance with a preferred embodiment of the subject invention; and
Figs. 2 and 3 illustrate and exemplify an interactive commercial advertisement arranged in accordance with a preferred embodiment of the subject invention.

### DETAILED DESCRIPTION OF THE PREFERRED EMBODIMENTS

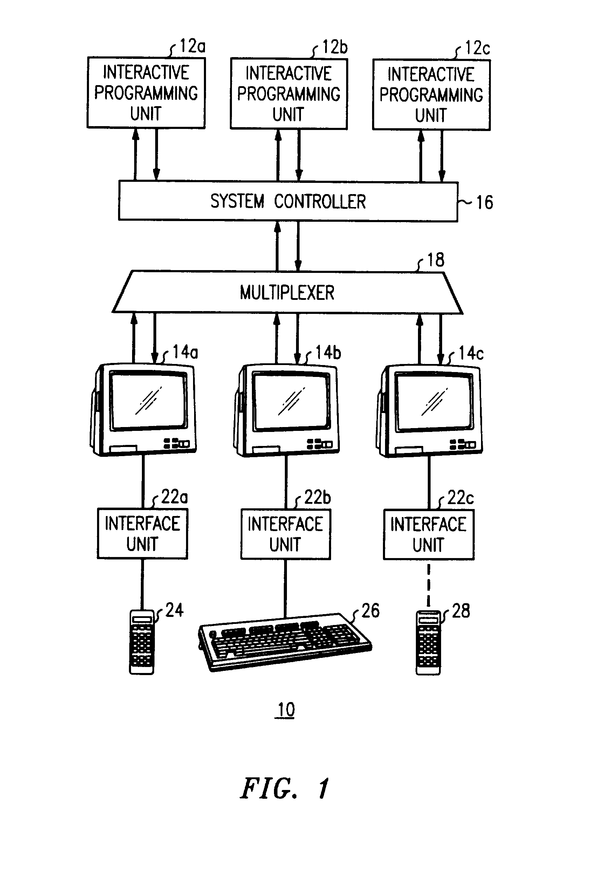

Referring now to the drawings wherein like reference numerals identify similar elements of the subject invention, there is illustrated in Fig. 1, a schematic representation of an interactive video advertising system configured in accordance with a preferred embodiment of the subject invention and designated generally by reference numeral 10. The interactive advertising system 10 of the subject invention is intended to encourage the viewing of a televised commercial advertisements by transmitting an interactive message during the advertisement so as to evoke a response from a viewer. As a result, advertisers will have greater commercial success for their products and/or services.

Referring now to Fig. 1, in brief, the interactive advertising system 10 of the subject invention includes a plurality of interactive programming units 12a-12c, a plurality of remote video display units 14a-14c, and a system controller 16. Programming units 12a-12c are each configured to accept a program as input, i.e. an interactive message in the form of an alpha-numeric expression, and prepare the program for execution. The programming units are also configured to acquire and store data, such as viewer responses to the interactive message. Data acquisition systems adapted to receive data from one or more remote points are well known in the art. High capacity magnetic or optical read/write data storage devices are also known in the art and are well suited for this application.

The interactive programming units 12a-12c communicate with the system controller 16. It is envisioned that data may be transmitted electrically, optically, or via a wireless communication network. The system controller 16 is configured to send the programs or interactive messages generated by programming units 12a-12c to video display units 14a-14c, receive viewer responses from the video display units, and transmit the responses back to the programming units where they are stored for subsequent analysis and comparison.

Prior to delivering the programs to the video display units, the system controller 16 transmits the interactive messages generated by programming units 12a-12c to a multiplexer 18. The multiplexer is configured to receive a plurality of messages in an interleaved format and subsequently separate the messages into a plurality of distinct signals for transmission to the individual video display units 14a-14c. Video display units 14a-14c are preferably conventional television terminals configured to receive incoming electric signals and convert the signals into transient visual images and associated audio.

Each video display unit 14a-14c is equipped with a respective interface unit 22a-22c which receives viewer responses communicated through data input devices and transmits the responses to the system controller 16 through multiplexer 18. The multiplexer correlates the interleaved data received from interface units 22a-22c and transmits the data in an interleaved format to the system controller 16.

Three types of data input devices are utilized with the interface units including a hand-held keypad unit 24, an alpha-numeric keyboard device 26, and an infrared remote control device 28. Each data input device is configured to transmit an encoded identification signal which corresponds to the viewer utilizing the device or the viewer's location. This information is transmitted to the system controller 16 along with the viewer's response to the interactive message. Accordingly, viewer responses can be analyzed and compared in terms of particular demographic groups, goods can be delivered to particular locations, or prizes can be awarded to particular viewers.

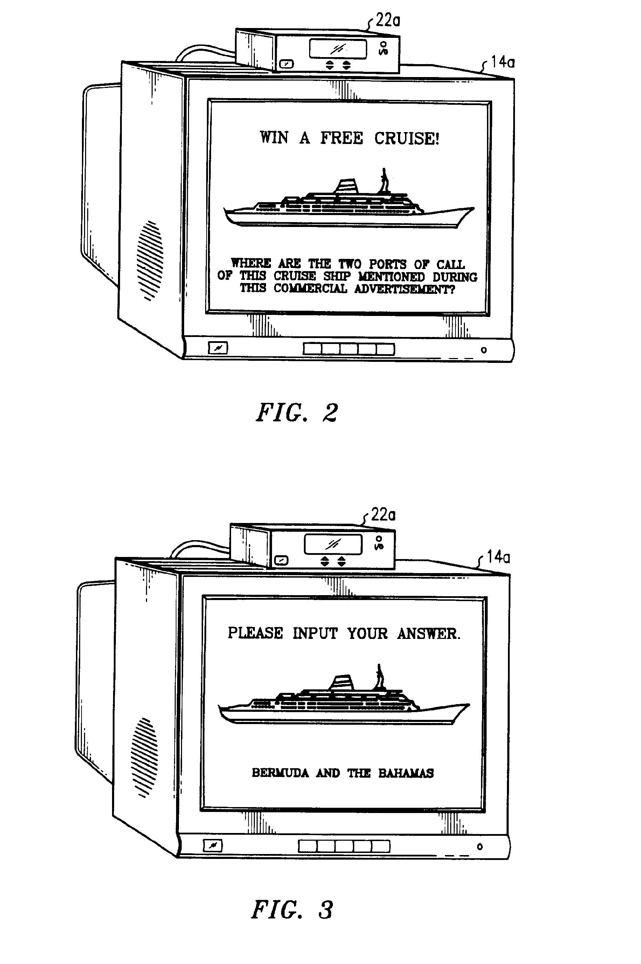

An example of a televised interactive commercial advertisement intended to encourage viewer participation is illustrated in Figs. 2 and 3. Specifically, this advertisement is intended to promote a cruise line and offers a free cruise to viewers who respond correctly to a particular question. During such a commercial, the advertiser would describe the cruise ship and several of its ports of call. An interactive message is transmitted to the video display unit at the conclusion of the commercial in the form of an interactive inquiry. For example, the message in Fig. 2 states "Where are the two ports of call of this cruise ship mentioned during this commercial advertisement?"

Thereafter, as illustrated in Fig. 3, the interactive commercial asks the viewer to input an answer. At such a time, utilizing either the remote control device 28, the keyboard 26, or the keypad 24, the viewer inputs an answer. In this instance, the viewer inputs the answer "Bermuda and Bahamas". Thereupon, the response is transmitted from the particular interface unit, together with an encoded identification signal, to the system controller 16. The system controller then transmits the response to the programming unit which generated the interactive message. The response is then stored for subsequent analysis, and a free cruise is awarded to a particular viewer if they have answered the query correctly.

A demographic study can also be performed utilizing a pool of stored viewer responses to interactive messages. Such studies could be based upon the age or occupation of a particular viewer, of the geographical location of the viewer. Utilizing such a system, advertisers can also collect information on viewer preference to particular goods and services.

Although the subject invention has been described with respect to preferred embodiments, it will be readily apparent to those having ordinary skill in the art to which it appertains that changes and modifications may be made thereto without departing from the spirit or scope of the subject invention as defined by the appended claims.

## Claims

1. A video communication system for facilitating real-time viewer interaction with an interactive commercial advertisement so as to encourage viewing of said commercial advertisement, said system comprising:
a) at least one video display unit configured to receive and display a video transmission including an interactive commercial advertisement;
b) means for transmitting an interactive message to said at least one video display unit during said interactive commercial advertisement so as to evoke a response from a viewer;
c) a system control device for facilitating communication between said message transmitting means and said at least one video display unit;
d) means associated with said at least one video display unit for enabling a viewer to respond to said interactive message; and
e) means associated with said at least one video display unit for facilitating communication between said response enabling means and said system control device.

2. A television system for facilitating real-time viewer interaction with an interactive commercial advertisement so as to encourage viewing of said commercial advertisement, said system comprising:
a) a plurality of video display units each configured to receive and display a video transmission including an interactive commercial advertisement;
b) at least one message generating device configured to transmit an interactive message to each of said plurality of video display units during said interactive commercial advertisement to evoke a response from a viewer of each of said video display units;
c) a system control device for facilitating communication between said plurality of video display units and said at least one message generating device;
d) means associated with each of said plurality of video display units for enabling a viewer to respond to said interactive message; and
e) an interface unit associated with each video display units for enabling communication between said response enabling means and said system control device.

3. A system as recited in claim 1, or 2, wherein said response enabling means includes a data entry device configured to communicate with said system control device, such as through an interface device.

4. A system as recited in claim 1, or 2, wherein said response enabling means is a hand-held data entry device, for example a remote controlled device.

5. A system as recited in claim 1, or 2, wherein said response enabling means is an infrared remote control device.

6. A system as recited in claim 1, or 2, wherein said response enabling means is an alpha-numeric keyboard.

7. A system as recited in claim 1, or 2, wherein said data entry device is configured to transmit an identification code to said system control device.

8. A system as recited in claim 7, wherein said identification code corresponds to a particular viewer utilizing said data entry device.

9. A system as recited in claim 7, wherein said identification code corresponds to a particular location of said data entry device.

10. A system as recited in claim 1, further comprising means for conditioning a plurality of interactive messages and a plurality of viewer responses for transmission throughout said system.
